# EUROPÄISCHE PATENTSCHRIFT

(11) **EP 3 388 741 B1**
(45) Veröffentlichungstag und Bekanntmachung des Hinweises auf die Patenterteilung: **10.03.2021**
(21) Anmeldenummer: 18166459.0
(22) Anmeldetag: 10.04.2018
(51) Int. Cl.: F21V 5/00, F21V 5/04, G02B 19/00, F21V 7/00, F21Y 105/10, F21K 9/61, F21S 43/241

(54) **MEHRFACHLINSENANORDNUNG FÜR EINE BELEUCHTUNGSVORRICHTUNG**
MULTI-LENS ASSEMBLY FOR A LIGHTING DEVICE
DISPOSITIF À LENTILLES MULTIPLES POUR UN DISPOSITIF D'ÉCLAIRAGE

(30) Priorität: 13.04.2017 DE 102017108113
(43) Veröffentlichungstag der Anmeldung: 17.10.2018
(73) Patentinhaber: RZB Rudolf Zimmermann, Bamberg GmbH, 96052 Bamberg (DE)
(72) Erfinder: Drawert, Sergio, 96114 Hirschaid (DE); Beier, Enrico, 96047 Bamberg (DE); Luschinski, Angela, 91301 Forchheim (DE)
(74) Vertreter: Kruspig, Volkmar

(56) Entgegenhaltungen:
- EP-A1- 1 288 562
- EP-A1- 2 902 693
- JP-A- 2012 074 258
- US-A1- 2011 309 735
- US-A1- 2014 036 510
- US-A1- 2016 047 511

## Beschreibung

Die Erfindung betrifft eine Beleuchtungsvorrichtung mit Mehrfachlinsenanordnung, wobei mindestens zwei Linsenkörper mit jeweils einer Strahlungseintritts- und -austrittsfläche versehen, ineinander geschachtelt ausgebildet sind, wobei ein zweiter, äußerer Linsenkörper einen ersten, inneren Linsenkörper radial umgibt gemäß Oberbegriff nach Patentanspruch 1.

Aus der DE 10 2006 031 345 A1 ist ein Beleuchtungssystem mit einer Vielzahl von Leuchtdioden, die sich auf einem Trägermaterial befinden, vorbekannt, wobei eine Optik vorgesehen ist, die eine gleichmäßige, gerichtete Lichtabstrahlung ermöglicht. Darüber hinaus ist dort eine Ansteuervorrichtung gezeigt, über welche die Leuchtdioden einzeln ansteuerbar sind, so dass unterschiedliche Lichteffekte realisiert werden können.

Gemäß der DE 10 2010 019 436 A1 ist eine Leuchte mit einer Vielzahl von Leuchtmitteln vorbekannt, wobei als Leuchtmittel lichtemittierende Dioden zum Einsatz kommen. Mindestens einem der Leuchtmittel ist eine Linse zugeordnet, wobei auch mehrere Linsen für mehrere Leuchtmittel gemeinsam vorgesehen sein können.

Die EP 2 518 398 B1 offenbart eine Anordnung zur veränderbaren Lichtabgabe mit einer Vielzahl von lichtemittierenden Dioden und einem Leuchtmittelträger. Die Variation der Lichtabgabe erfolgt durch Ansteuerung einzelner LEDs oder von LED-Gruppen. Darüber hinaus ist dort erläutert, die Lichtabgabe dadurch zu verändern, dass die Leuchte eine Lichtaustrittsfläche besitzt, welche als Lichtlenkungselement ausgebildet wird.

Die DE 10 2011 012 129 A1 betrifft eine Beleuchtungsvorrichtung, insbesondere in Form eines Deckenstrahlers mit einer punktförmigen Lichtquelle. Die Lichtquelle ist vorzugsweise als LED ausgeführt. Darüber hinaus ist eine der Lichtquelle zugeordnete Linsenanordnung vorgesehen.

Mit dieser Beleuchtungsvorrichtung sollen für verschiedene Raumbereiche unterschiedliche Lichtverteilungen bereitgestellt werden können. Unabhängig davon soll ein insgesamt einheitliches Erscheinungsbild der Beleuchtungsanordnung gewahrt werden.

Insofern geht es bei der DE 10 2011 012 129 A1 um einen kleinbauenden Strahler in Form eines Downlights, der hinsichtlich seiner Lichtverteilungskurve in einfacher Weise an verschiedene Aufgaben anpassbar ist.

Diesbezüglich wird vorgeschlagen, die der Lichtquelle zugeordnete Linsenanordnung modular aufzubauen, um einzelne Linsenbausteine einfach austauschen und verschiedene Linsenbausteine in variabler Weise miteinander kombinieren zu können.

Diesbezüglich besitzt die Linsenanordnung zumindest zwei separate, ineinander geschachtelt angeordnete Linsenbausteine, umfassend eine an der Lichtquelle sitzende innere Linse sowie eine die innere Linse napfförmig umgreifende äußere Linse.

Die innere Linse ist hier als separate, vor die Lichtquelle geschaltete Linse ausgeführt. Durch die übereinander gestülpte bzw. ineinandergreifende Anordnung der inneren und äußeren Linsen kann trotz der Linsenmehrzahl eine insgesamt kleinbauende Linsenanordnung geschaffen werden.

Die äußere Linse soll weiterhin als Wechselbaustein realisiert werden und insofern über werkzeugfrei betätigbare Schnellbefestigungsmittel austauschbar sein. In Weiterbildung der dortigen Lehre ist ein gemeinsamer Linsenhalter für die Linsenbausteine der Linsenanordnung vorgesehen, an dem die innere Linse und die äußere Linse gelagert sind.

Bei einer Ausführungsform der DE 10 2011 012 129 A1 sitzt die innere Linse im Wesentlichen unmittelbar an der Lichtquelle, um das gesamte Licht der Lichtquelle einzufangen und von der Lichtquelle gerichtet abzustrahlen, um dann die Strahlung auf die zweite, äußere Linse zu lenken, die dann den Abstrahlkegel des Strahlers endgültig bestimmt.

Die Schachtelung gemäß der DE 10 2011 012 129 A1 ist dabei so realisiert, dass die Strahlung über die innere Linse zur zweiten, äußeren Linse geführt wird, wobei maßgeblich die zweite, äußere Linse die Abstrahlcharakteristik bestimmt. Um unterschiedliche Abstrahlcharakteristika zu realisieren, muss zwangsläufig die Linsenanordnung demontiert und die äußere Linse gewechselt werden.

Die EP 1 288 562 A1 offenbart eine Signalgebungsvorrichtung für Kraftfahrzeuge. Dort ist ein Lichtleiter vorhanden, der wenigstens einer Lichtquelle zugeordnet ist. Der Lichtleiter dient der Übertragung der Lichtstrahlen von einer Eintrittsfläche zu einer Austrittsfläche unter Nutzung eines dazwischenliegenden Abschnittes. Die Oberflächen dazwischenliegender Abschnitte zur Übertragung der Lichtstrahlen weisen sogenannte Paraboloid-Bereiche auf. Wenn die vorbekannten Lichtquellen wenigstens eine Glühlampe umfassen, ist eine Fresnel-Linsenanordnung nutzbar, um die von der Glühlampe abgegebenen Lichtstrahlen in ein Bündel paralleler Strahlen umzuwandeln, wobei die Eintrittsfläche des Lichtleiters gegenüber der Glühlampe eben ausgebildet ist. In ähnlicher Weise kann beim Einsatz von Leuchtdioden als Lichtquelle die Eintrittsfläche des Lichtleiters eben ausgeführt werden und Fresnel-Prismen aufweisen.

Aus der US 2011/0309735 A1 ist ein Lichtkolben bekannt, der aus zwei koaxialen inneren und äußeren Lichtleitern besteht, die beispielsweise zylindrisch geformt sind. Spezielle Festkörperleuchtmittel können Strahlung in diese koaxialen Lichtleiter einkoppeln. Zwischen den zylindrischen Körpern liegt ein Luftspalt vor, der der Vermeidung thermischer Probleme dient. Die Lichtleiter können verschiedene Ausgestaltungen aufweisen, und zwar im Sinne zusätzlicher optischer Elemente, um die Strahlungsauskopplung zu variieren. Das dort beschriebene Leuchtmittel ist ein sogenanntes Retrofit-Beleuchtungsmittel, das in klassische Lampenfassungen eingeschraubt werden kann. Anstelle üblicher Glühlampen kommen hier lichtemittierende Dioden zum Einsatz.

Ein ähnliches Beleuchtungsmittel offenbart die JP 2012074258 A. Auch dort sind Lichtleiter vorhanden, die in Verbindung mit Halbleiterstrahlungsquellen stehen.
Ein optisches System mit der Möglichkeit, verschiedene, lichtmischende Linsen aufzunehmen, ist in der US 2016/0047511 beschrieben. Die Lichteinkopplung in dieses System erfolgt über eine Lichtleiteranordnung.
Ein Retrofit-Leuchtmittel mit verschiedenen LEDs, die als Chipbauelemente auf einer Leiterplatte angeordnet sind, offenbart die EP 2 902 693 A1.
Zur Erzeugung unterschiedlicher Lichteffekte wird die von den LEDs erzeugte Strahlung in eine beispielsweise zylindrische Anordnung mehrerer beabstandeter lichtleitender Körper eingekoppelt.
Die gattungsbildende US 2014/0036510 A1 offenbart eine
Mehrfachlinsenanordnung mit einer Einkoppeloptik unter Nutzung des Effektes einer inneren Totalreflexion.
Aus dem Vorgenannten ist es Aufgabe der Erfindung, eine weiterentwickelte Beleuchtungsvorrichtung mit Mehrfachlinsenanordnung anzugeben, welche die Nachteile des Standes der Technik vermeidet und insbesondere geeignet ist, mit ein und derselben Linsenanordnung allein durch eine gezielte Ansteuerung der eingesetzten Strahlungsquellen, insbesondere lichtemittierende Dioden, unterschiedliche Abstrahlcharakteristika zu gewährleisten.
Die Lösung der Aufgabe der Erfindung erfolgt durch eine Beleuchtungsvorrichtung gemäß der Merkmalskombination nach Patentanspruch 1, sowie durch eine Verwendung einer Beleuchtungsvorrichtung als Fassadenleuchte mit unterschiedlichen Abstrahlwinkeln und Lichtverteilungen ohne mechanisch konstruktiven Eingriff zur Änderung der jeweiligen Abstrahlcharakteristiken gemäß Anspruch 9.

Es wird demnach von einer Mehrfachlinsenanordnung für eine Beleuchtungsvorrichtung ausgegangen. Die Beleuchtungsvorrichtung umfasst mindestens zwei Linsenkörper mit jeweils einer Strahlungseintritts- und Strahlungsaustrittsfläche. Die Linsenkörper sind ineinander geschachtelt ausgebildet, wobei ein zweiter, äußerer Linsenkörper einen ersten, inneren Linsenkörper radial umgibt.

Jeder Linsenkörper ist an seiner Strahlungseintrittsseite mit einer Einkoppeloptik versehen.

Zwischen den Linsenkörpern besteht darüber hinaus in seitlicher, radialer Richtung jeweils ein Abstand.

Weiterhin bilden die Linsenkörper mit ihren jeweiligen Strahlungseintrittsflächen eine gemeinsame Ebene.

Die jeweiligen Strahlungsaustrittsflächen liegen auf unterschiedlichen, voneinander beabstandeten Ebenen.

Bei einer bevorzugten Ausführungsform sind die Linsenkörper konisch ausgeführt und konzentrisch geschachtelt oder konisch und nicht-konzentrisch geschachtelt.

Die Linsenformen können konisch-ovale aber auch quadratisch oder rechteckige Ausgestaltungen aufweisen, wobei maßgeblich die ineinander erfolgte Verschachtelung derart, dass sich eine nebeneinander liegende Ausbildung der Einzellinsen ergibt, ist.

Der vorerwähnte Abstand zwischen den Linsenkörpern ist so realisiert, dass ein Strahlungseintritt oder eine Strahlungskopplung zwischen den jeweils benachbarten Linsenkörpern durch Totalreflexion an den jeweiligen Linsenwänden verhinderbar ist.

In einer Ausbildung sind drei oder mehr Linsenkörper geschachtelt ausgebildet, wobei jede Strahlungseintrittsfläche einen Abschnitt der gemeinsamen Ebene bildet.

Jedem Linsenkörper ist in bevorzugter Weiterbildung der Erfindung mindestens eine, der jeweiligen Einkoppeloptik gegenüberliegende Strahlungsquelle, insbesondere eine LED zugeordnet.

Damit wird jeder Linsenkörper unabhängig vom benachbarten Linsenkörper mit Strahlung beaufschlagt. Durch die erwähnte Abstände zwischen den Linsenkörpern wird eine gegenseitige Beeinflussung der Strahlung innerhalb der Mehrfachlinsenanordnung ausgeschlossen, zumindest aber reduziert.

Bei einer bevorzugten Ausbildung der Erfindung befinden sich die Strahlungsquellen auf einem Träger, welcher der gemeinsamen Ebene gegenüberliegt.

Die Strahlungsquellen sind entsprechend der konisch konzentrischen Schachtelung der Linsenkörper auf dem Träger befindlich.

Die Strahlungsquellen sind einzeln oder in Gruppen ansteuerbar derart, dass entsprechend der räumlichen Zuordnung der Strahlungsquellen zum jeweiligen Linsenkörper und der Ansteuerung unterschiedliche Abstrahlwinkel und Lichteffekte wählbar sind.

Die Strahlungsquellen können darüber hinaus Strahlung unterschiedlicher Wellenlängen erzeugen und/oder dimmbar und/oder dynamisch ansteuerbar sein, um zeitlich veränderbare Abstrahlwinkel und Lichteffekte zu erzeugen.

Die Strahlungsquellen können hierbei als Gruppe von oberflächenmontierbaren LED-Einzelchips (SMD-LEDs) auf einem gemeinsamen Verdrahtungsträger oder als Chip-On-Board-LEDs ausgeführt werden.

Eine erfindungsgemäße Beleuchtungsvorrichtung wird mit mindestens einer Mehrfachlinsenanordnung wie vorstehend beschrieben, versehen und ist in der Lage, beispielsweise als Fassadenleuchte unterschiedliche Abstrahlwinkel und Lichtverteilungen zu erzeugen, ohne dass ein mechanisch konstruktiver Eingriff zur Änderung der jeweiligen Abstrahlcharakteristika erfolgen muss.

Die Erfindung soll nachstehend anhand von Ausführungsbeispielen sowie unter Zuhilfenahme von Figuren näher erläutert werden.

Hierbei zeigen:
- Fig. 1: einen perspektivischen Längsschnitt einer erfindungsgemäßen Mehrfachlinsenanordnung mit drei Linsenkörpern;
- Fig. 2: auf eine Draufsicht eines Trägers mit der Anordnung von LED-Chips in quasi Halbkreisform;
- Fig. 3: eine Darstellung ähnlich derjenigen nach Fig. 2, jedoch in einer Kreisform;
- Fig. 4: einen Längsschnitt durch eine Mehrfachlinsenanordnung mit gemeinsamer, durch die Strahlungseintrittsflächen gebildeter Ebene und in dieser Ebene bzw. der Ebene gegenüberliegende Strahlungsquellen mit Abschnitten frei von Strahlungsquellen, beispielsweise bei einer Trägerkonfiguration mit einer Anordnung von Strahlungsquellen gemäß Fig. 2; und
- Fig. 5: eine Darstellung ähnlich derjenigen nach Fig. 4, jedoch mit konzentrischer Strahlungsquellenanordnung, und zwar bezogen auf alle wesentlichen Strahlungseintrittsflächenabschnitte der Linsenanordnung.

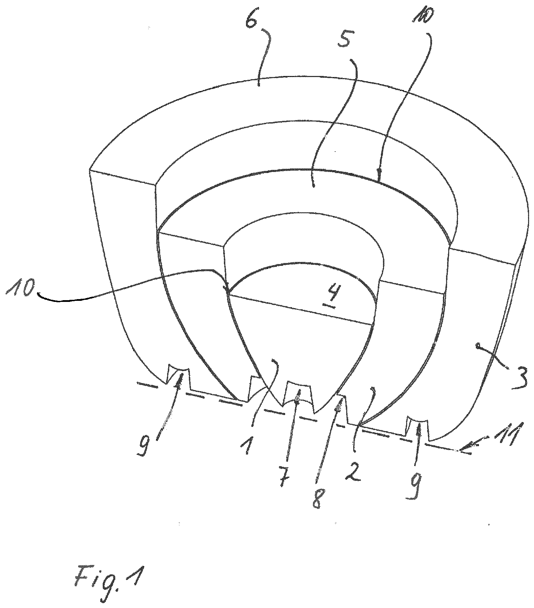

Gemäß den Darstellungen nach den Fig. 1, 4 und 5 wird beim Ausführungsbeispiel von einer Mehrfachlinsenanordnung für eine Beleuchtungsvorrichtung ausgegangen, welche mindestens drei Linsenkörper aufweist.

Dabei wird zunächst von einem ersten inneren Linsenkörper 1 ausgegangen.

Dieser erste, innere Linsenkörper 1 ist von einem mittleren Linsenkörper 2 konzentrisch umgeben.

Dem mittleren Linsenkörper 2 schließt sich in radialer Richtung ein äußerer Linsenkörper 3 an.

Die Linsenkörper 1-3 sind gemäß dem Ausführungsbeispiel konisch konzentrisch ausgebildet, wobei keine strenge konische Form zwingend ist, sondern die jeweiligen Seitenwände der Linsenkörper 1-3 auch einen bogenförmigen Verlauf besitzen können.

Obwohl bei den Ausführungsbeispielen und den Figuren von einer quasi Kreisringform der Strahlungseintritts- und Strahlungsaustrittsflächen ausgegangen wird, sind hier auch völlig andere Konfigurationen, zum Beispiel quadratische, rechteckige oder ovale Geometrien denkbar, ohne den Grundgedanken der Erfindung zu verlassen.
Die Linsenkörper 1-3 besitzen jeweils eine Strahlungsaustrittsfläche 4; 5; 6.

Jeder Linsenkörper weist außerdem eine Strahlungseintrittsfläche auf, wobei jeder Linsenkörper 1-3 an seiner Strahlungseintrittsseite oder Strahlungseintrittsfläche mit einer Einkoppeloptik 7, 8, 9 versehen ist.

Zwischen den Linsenkörpern 1; 2 sowie 2; 3 ist jeweils ein Abstand 10 vorgesehen. Die Linsenkörper 1, 2 und 3 bilden mit ihren jeweiligen Strahlungseintrittsflächen, das heißt den in der Fig. 1 gezeigten Unterseiten eine gemeinsame Ebene 11.

Die jeweiligen Strahlungsaustrittsflächen 4, 5 und 6 liegen hingegen auf unterschiedlichen, höhenmäßig beabstandeten Ebenen, wie dies aus den Fig. 1, 4 und 5 nachvollziehbar ist.

Die Oberflächen der Strahlungsaustrittsflächen 4, 5 und/oder 6 können eine Strukturierung im Sinne von kleineren Linsenkörpern besitzen oder opak ausgebildet sein, wenn beispielsweise eine Lichtstreuung im Sinne einer diffusen Abstrahlung in bestimmten Abschnitten der Mehrfachlinsenanordnung gewünscht wird.

Der jeweilige Abstand 10 zwischen den Linsenkörpern 1 und 2 bzw. 2 und 3 dient zur Verhinderung eines Strahlungseintrittes oder einer Strahlungskopplung zwischen den jeweils benachbarten Linsenkörpern durch Totalreflexion.

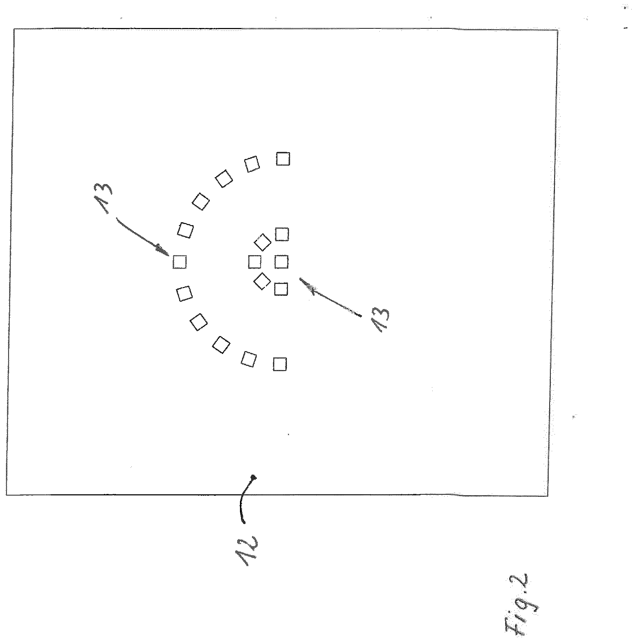

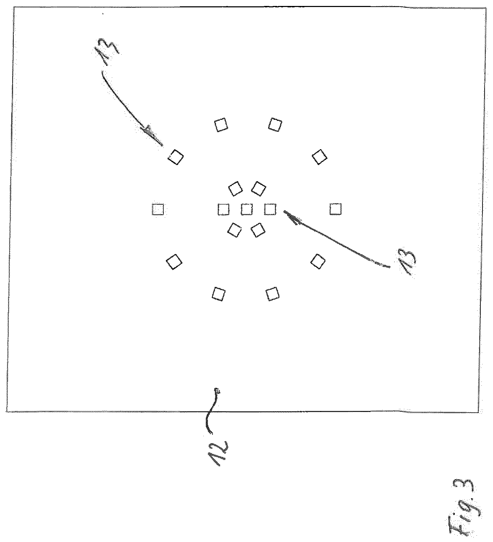

Die Fig. 2 und 3 zeigen Ausführungsbeispiele eines Trägers 12, welcher jeweils eine Vielzahl von LED-Chips 13 aufnimmt.

Die geometrische Anordnung der LED-Chips 13 auf dem Träger 12 ist so gewählt, dass die entsprechenden LED-Chips 13 den jeweiligen Einkoppeloptiken 7, 8 und/oder den entsprechenden Linsenkörper 1, 2 und 3 gegenüberliegen.

Dabei müssen sich die LED-Chips 13 nicht vollständig über alle Abschnitte der jeweiligen Strahlungseintrittsseiten der jeweiligen Linsenkörper 1, 2 und 3 erstrecken. Die Anordnung, die Auswahl und die gegebenenfalls abschnittsweise Anordnung der LED-Chips 13 ist angepasst an die jeweilige gewünschte Abstrahlcharakteristik sowie den Anwendungs- und Einsatzfall einer Beleuchtungseinrichtung mit der erfindungsgemäßen Mehrfachlinsenanordnung.

Gleiches gilt für die Dichte, das heißt die Anzahl von einzelnen LED-Chips bezogen auf ein Kreisringsegment wie beispielsweise in der Fig. 3 gezeigt.

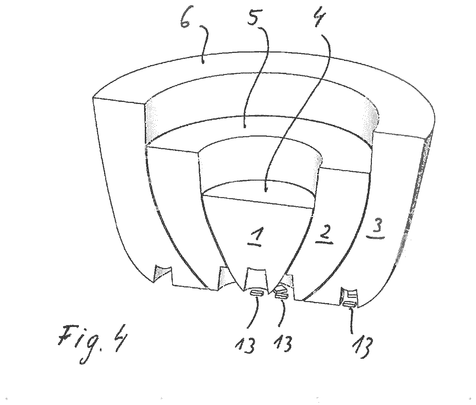

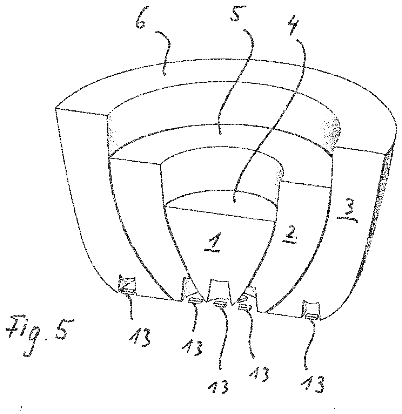

Die Position der LED-Chips je nach gewünschter oder gewählter Ausbildung des Trägers 12 mit entsprechenden LED-Chips 13 ist anhand der Darstellung gemäß den Fig. 4 und 5 nachvollziehbar.

Die LED-Chips 13 können einzeln angesteuert oder aber auch in Gruppen betrieben werden.

Die LED-Chips können als Mehrfarben-LEDs ausgeführt oder als Weißlicht-LEDs realisiert werden.

Bei einer mehrfarbigen Ausführungsform können durch gezielte Ansteuerung Mischfarben oder Farbeffekte, abgestimmt auf die Anwendung der Beleuchtungsvorrichtung bzw. deren Einsatzgebiet gewählt werden.

Bei einer kreisringförmigen Ausgestaltung und Anordnung von LED-Chips 13 auf einem Träger 12 gemäß der Fig. 3 besteht die Möglichkeit, beispielsweise asymmetrische Strahlungsverteilungen zu realisieren, dann, wenn beispielsweise nur einzelne Elemente, das heißt einzelne LED-Chips eines beispielsweise Halbringes angesteuert werden.

Obwohl in den Figuren von einer Linsenkörperanordnung bestehend aus drei Linsenkörpern ausgegangen wurde, sind abweichend hiervon auch mehr als drei Linsenkörper zur Bildung der Mehrfachlinsenanordnung denkbar.

Für den Fall, dass sogenannte Chip-On-Board (COB)-LEDs zum Einsatz kommen, besteht die Möglichkeit, die Linsenanordnung abgestimmt auf die Flächenform der COB-Dioden zu miniaturisieren.

Es versteht sich von selbst, dass auf der betreffenden Rückseite des Trägers bzw. der Rückseite der COB-Dioden Mittel zur Wärmeabfuhr, das heißt zur Kühlung der LEDs in Form einer Wärmesenke angeordnet werden können.

Die erfindungsgemäße Mehrfachlinsenanordnung findet für Beleuchtungsvorrichtungen bevorzugt Einsatz.

Insbesondere kann es sich hier um sogenannte Fassadenleuchten handeln. Derartige Leuchten sollen auf der Fassade eines Gebäudes einen Lichteindruck mit unterschiedlichen Ausstrahlungswinkeln und unterschiedlichen Lichtverteilungen erzeugen. Bekannte Leuchten besitzen nur eine feste Ausstrahlungscharakteristik. Um eine feste Ausstrahlungscharakteristik zu modifizieren, ist es bekannt, zusätzliche Blendschuten oder Lamellenblenden einzusetzen. In allen Fällen muss jedoch ein mechanisch konstruktiver Eingriff vorgenommen werden.

Mit Hilfe der erfindungsgemäßen Mehrfachlinsenanordnung und den zugeordneten Strahlungsquellen besteht allein durch Beschaltung, das heißt durch gezielte Ansteuerung der LEDs die Möglichkeit, mit ein und derselben Leuchte und ein und derselben Mehrfachlinsenanordnung unterschiedliche Ausstrahlungscharakteristiken zu realisieren.

Je nach Anzahl n der LED-Chips bzw. der einzeln ansteuerbaren LEDs lassen sich n! Schalt- und Ansteuerkombinationen realisieren mit den sich dann ergebenden individuellen Abstrahlcharakteristika.

Selbstverständlich besteht die Möglichkeit, die einzeln oder in Gruppen zusammengeschaltenen LEDs auch zu dimmen, so dass eine Anpassung der Beleuchtungsvorrichtung mit der entsprechenden Mehrfachlinsenanordnung an die jeweilige Beleuchtungssituation, zum Beispiel Beleuchtung mit unterschiedlicher Intensität bei einsetzender Dämmerung bis hin in die Nachtstunden erfolgen kann.

Die jeweiligen Linsenkörper werden gemäß der Zwiebelschalen-vergleichbaren-Konstruktion einzeln hergestellt und dann zu einem Mehrfachlinsenkörper kompaktiert bzw. zusammengebaut. Mit einer definierten, vorgehaltenen Gruppe von Standard-Einzellinsenkörpern kann dann je nach Fertigungslos eine Gruppe von Einzellinsenkörpern ausgewählt und zum Mehrfachlinsenkörper zusammengestellt werden.

Auch die jeweiligen Verdrahtungsträger für die LED-Chips können vorgefertigt und quasi standardisiert vorrätig gehalten werden und dann je nach Applikationshintergrund bzw. Leuchtenkonstruktion mit entsprechenden Linsenkörpern zu einer Anordnung, umfassend die Mehrfachlinsen nebst Strahlungsquellen komplettiert werden.

Bei einer Weiterbildung der Erfindung besteht die Möglichkeit, im Bereich der Einkoppeloptiken 7, 8 und/oder 9 unmittelbar LED-Chips einzusetzen, so dass sich ein Verbundkörper aus Linse und LED-Chip ergibt. Dabei kann gleichzeitig ein Element, wirkend als Wärmesenke, zum Beispiel in Form von wärmeleitfähigen Ringen, in die gebildete Anordnung integriert werden.

## Patentansprüche

1. Beleuchtungsvorrichtung mit Mehrfachlinsenanordnung, wobei mindestens zwei Linsenkörper (1; 2; 3) mit jeweils einer Strahlungseintritts- und -austrittsfläche versehen, ineinander geschachtelt ausgebildet sind, wobei ein zweiter, äußerer Linsenkörper (3) einen ersten, inneren Linsenkörper (1) radial umgibt, wobei
jeder Linsenkörper (1; 2; 3) an seiner Strahlungseintrittsseite mit einer Einkoppeloptik (7; 8; 9) versehen ist, wobei zwischen den Linsenkörpern (1; 2; 3) in seitlicher, radialer Richtung ein Abstand (10) vorliegt, sowie weiterhin die Linsenkörper (1; 2; 3) mit ihren jeweiligen Strahlungseintrittsflächen eine gemeinsame Ebene (11) bilden oder auf einer gemeinsamen Ebene (11) liegen und weiterhin der Abstand (10) einen Strahlungseintritt oder eine Strahlungskopplung zwischen jeweils benachbarten Linsenkörpern (1; 2 bzw. 2; 3) durch Totalreflexion an den jeweiligen Linsenwänden verhindert, jedem Linsenkörper (1; 2; 3) mindestens eine, der jeweiligen Einkoppeloptik (7; 8; 9) gegenüberliegende Strahlungsquelle (13), zugeordnet ist, sowie die Strahlungsquellen (13) einzeln oder in Gruppen ansteuerbar sind, derart, dass entsprechend der räumlichen Zuordnung der Strahlungsquellen (13) zum jeweiligen Linsenkörper (1; 2; 3) und der Ansteuerung unterschiedliche Abstrahlwinkel und Lichteffekte wählbar sind,
**dadurch gekennzeichnet, dass**
die optische Achse der Mehrfachlinsenanordnung durch die Einkoppeloptik (7) und die Strahlungsaustrittsfläche (4) des ersten, inneren Linsenkörpers (1) verläuft.

2. Beleuchtungsvorrichtung nach Anspruch 1,
**dadurch gekennzeichnet, dass**
die jeweiligen Strahlungsaustrittsflächen auf unterschiedlichen, voneinander beabstandeten Ebenen liegen.

3. Beleuchtungsvorrichtung nach Anspruch 1 oder 2,
**dadurch gekennzeichnet, dass**
die Linsenkörper (1; 2; 3) konisch ausgeführt und konzentrisch geschachtelt oder konisch und nicht-konzentrisch geschachtelt sind.

4. Beleuchtungsvorrichtung nach einem der vorangegangenen Ansprüche,
**dadurch gekennzeichnet, dass**
drei oder mehr Linsenkörper (1; 2; 3) geschachtelt ausgebildet sind.

5. Beleuchtungsvorrichtung nach Anspruch 1,
**dadurch gekennzeichnet, dass**
die Strahlungsquellen (13) sich auf einem Träger (12) befinden, welcher der gemeinsamen Ebene gegenüberliegt oder der die gemeinsame Ebene (11) bildet.

6. Beleuchtungsvorrichtung nach Anspruch 3 und 5,
**dadurch gekennzeichnet, dass**
die Strahlungsquellen (13) entsprechend der konisch konzentrischen Schachtelung der Linsenkörper (1; 2; 3) auf dem Träger (12) befindlich sind.

7. Beleuchtungsvorrichtung nach Anspruch 1,
**dadurch gekennzeichnet, dass**
die Strahlungsquellen (13) Strahlung unterschiedlicher Wellenlänge erzeugen und/oder dimmbar und/oder dynamisch ansteuerbar sind, um zeitlich veränderte Abstrahlwinkel und Lichteffekte zu erzeugen.

8. Beleuchtungsvorrichtung nach einem der Ansprüche 1 bis 7,
**dadurch gekennzeichnet, dass**
die Strahlungsquellen (13) als Gruppe von SMD-LED-Einzelchips auf einem gemeinsamen Verdrahtungsträger oder Chip-On-Board-LEDs (COB) ausgeführt sind.

9. Beleuchtungsvorrichtung nach einem der vorangegangenen Ansprüche,
**gekennzeichnet durch**
deren Verwendung als Fassadenleuchte mit unterschiedlichen Abstrahlwinkeln und Lichtverteilungen ohne mechanisch konstruktiven Eingriff zur Änderung der jeweiligen Abstrahlcharakteristika.

## Claims

1. A lighting device having a multi-lens assembly, wherein at least two lens bodies (1; 2; 3), each provided with a radiation entry and exit surface are formed to be nested within one another, wherein a second, outer lens body (3) radially surrounds a first, inner lens body (1), wherein each lens body (1; 2; 3) is provided with a coupling-in optics (7; 8; 9) at its radiation entry side, wherein a spacing (10) is present between the lens bodies (1; 2; 3) in a lateral, radial direction, as well as the lens bodies (1; 2; 3) furthermore form a common plane (11) with their respective radiation entry surfaces, or are situated on a common plane (11), and the spacing (10) furthermore preventing radiation from entering or radiation to be coupled in between respective adjacent lens bodies (1; 2 or 2; 3) by total reflection at the respective lens walls, each lens body (1; 2; 3) has a radiation source (13) associated opposite the respective coupling-in optics (7; 8; 9); as well as the radiation sources (13) are controllable individually or in groups such that different radiation emission angles and light effects are selectable corresponding to the spatial assignment of the radiation sources (13) to the respective lens body (1; 2; 3) and the control scheme,
**characterized in that**
the optical axis of the multi-lens assembly runs through the coupling-in optics (7) and the radiation exit surface (4) of the first, inner Lens body (1).

2. The lighting device according to claim 1,
**characterized in that**
the respective radiation exit surfaces are situated on different planes that are spaced from one another.

3. The lighting device according to claim 1 or 2,
**characterized in that**
the lens bodies (1; 2; 3) are configured to be conical and are nested concentrically or are nested conically and non-concentrically.

4. The lighting device according to any one of the preceding claims,
**characterized in that**
three or more lens bodies (1; 2; 3) are formed to be nested.

5. The lighting device according to claim 1,
**characterized in that**
the radiation sources (13) are located on a carrier (12) which is opposite the common plane or forms the common plane (11).

6. The lighting device according to claims 3 and 5,
**characterized in that**
the radiation sources (13) are located on the carrier (12) corresponding to the conically concentrical nesting of the lens bodies (1; 2; 3).

7. The lighting device according to claim 1,
**characterized in that**
the radiation sources (13) generate radiation of different wavelengths and/or are dimmable and/or dynamically controllable so as to generate temporally varied radiation emission angles and light effects.

8. The lighting device according to any one of claims 1 to 7,
**characterized in that**
the radiation sources (13) are realized as a group of SMD-LED single chips on a common wiring carrier or as chip-on-board (COB) LEDs.

9. The lighting device according to any one of the preceding claims,
**characterized by**
their use as a façade luminaire having different radiation emission angles and light distributions without any mechanically constructive intervention for varying the respective radiation emission characteristics.

## Revendications

1. Dispositif d'éclairage comprenant un agencement à lentilles multiples, dans lequel au moins deux corps de lentille (1 ; 2 ; 3) sont réalisés imbriqués les uns dans les autres, en étant dotés chacun d'une surface d'entrée de rayonnement et d'une surface de sortie de rayonnement, de sorte qu'un second corps de lentille (3) extérieur entoure radialement un premier corps de lentille (1) intérieur, dans lequel chaque corps de lentille (1 ; 2 ; 3) est doté d'une optique de couplage entrant (7 ; 8 ; 9) sur son côté d'entrée de rayonnement, dans lequel il existe une distance (10), en direction latérale radiale, entre les corps de lentille (1 ; 2 ; 3), et en outre les corps de lentille (1 ; 2 ; 3) forment avec leurs surfaces d'entrée de rayonnement respectives un plan commun (11) ou sont situés sur un plan commun (11), et la distance (10) empêche une entrée du rayonnement ou un couplage du rayonnement entre des corps de lentille respectivement voisins (1 ; 2, respectivement 2 ; 3) par réflexion totale au niveau des parois respectives des lentilles,
au moins une source de rayonnement (13), située à l'opposé de l'optique de couplage entrant respective (7 ; 8 ; 9) est associée à chaque corps de lentille (1 ; 2 ; 3),
et les sources de rayonnement (13) peuvent être pilotées individuellement ou par groupes, de telle façon que des angles de rayonnement et des effets lumineux différents peuvent être sélectionnés en correspondance de l'association spatiale des sources de rayonnement (13) par rapport au corps de lentille respectif (1 ; 2 ; 3) et du pilotage,
**caractérisé en ce que**
l'axe optique de l'agencement à lentilles multiples s'étend à travers l'optique de couplage entrant (7) et la surface de sortie de rayonnement (4) du premier corps de lentille (1) intérieur.

2. Dispositif d'éclairage selon la revendication 1,
**caractérisé en ce que** les surfaces de sortie de rayonnement respectives sont situées sur des plans différents à distance les uns des autres.

3. Dispositif d'éclairage selon la revendication 1 ou 2,
**caractérisé en ce que**
les corps de lentille (1 ; 2 ; 3) sont réalisés coniques et imbriqués concentriquement ou bien coniques et imbriqués de manière non concentrique.

4. Dispositif d'éclairage selon l'une des revendications précédentes,
**caractérisé en ce que** trois ou plusieurs corps de lentille (1 ; 2 ; 3) sont réalisés de manière imbriquée.

5. Dispositif d'éclairage selon la revendication 1,
**caractérisé en ce que** les sources de rayonnement (13) se trouve sur un support (12), celui-ci étant opposé au plan commun ou formant le plan commun (11).

6. Dispositif d'éclairage selon la revendication 3 et 5,
**caractérisé en ce que** les sources de rayonnement (13) se trouvent sur le support (12) de manière correspondante à l'imbrication conique concentrique des corps de lentille (1 ; 2 ; 3).

7. Dispositif d'éclairage selon la revendication 1,
**caractérisé en ce que** les sources de rayonnement (13) engendrent un rayonnement à différentes longueurs d'onde et/ou sont réglables en intensité et/ou sont susceptibles d'être pilotées de façon dynamique, afin d'engendrer des angles de rayonnement et des effets lumineux qui varient dans le temps.

8. Dispositif d'éclairage selon l'une des revendications 1 à 7,
**caractérisé en ce que** les sources de rayonnement (13) sont réalisées sous forme de groupe de puces individuelles à diodes électroluminescentes montées en surface sur un support de câblage commun ou bien sont réalisées sous forme de diodes électroluminescentes intégrées sur puce.

9. Dispositif d'éclairage selon l'une des revendications précédentes,
**caractérisé par** son utilisation à titre d'éclairage de façade avec des angles de rayonnement et des répartitions de lumière différent(e)s sans intervention structurelle mécanique pour la modification des caractéristiques de rayonnement respectives.
